# EUROPÄISCHE PATENTSCHRIFT

(11) **EP 1 057 759 B1**
(45) Veröffentlichungstag und Bekanntmachung des Hinweises auf die Patenterteilung: **12.03.2003**
(21) Anmeldenummer: 00111405.7
(22) Anmeldetag: 26.05.2000
(51) Int. Cl.: B65G 65/23

(54) **Hub- und Beschickungswagen**
Lifting and charging cars
Chariot élévateur-chargeur

(30) Priorität: 27.05.1999 DE 19924373
(43) Veröffentlichungstag der Anmeldung: 06.12.2000
(73) Patentinhaber: Fleischerei-Maschinen Vertriebs AG, Flema Aktiengesellschaft, 9487 Bendern (LI)
(72) Erfinder: Wohlwend, Günther, 9492 Eschen (LI)
(74) Vertreter: Menges, Rolf, Dipl.-Ing.

(56) Entgegenhaltungen:
- US-A- 3 845 884
- US-A- 3 978 999
- US-A- 5 895 196

## Beschreibung

Die Erfindung betrifft einen Hub- und Beschickungswagen der im Oberbegriff des Patentanspruchs 1 angegebenen Art. Ein solcher Wagen wird z.B. im Dokument US-A-5 895 196 offenbart.

Solche Hub- und Beschickungswagen werden in der Lebensmittel- und in der pharmazeutischen Industrie verwendet, um ein Produkt aus einer Maschine aufzunehmen, zu einer anderen Maschine zu transportieren und diese mit dem Produkt zu beschicken. Zu diesem Zweck werden die Hub- und Beschickungswagen, die an ihrer Unterseite im allgemeinen Räder haben, beispielsweise unter eine Zerkleinerungsmaschine gefahren, um aus dieser zerkleinertes Produkt aufzunehmen. Dann werden die Wagen zu einer Füllmaschine gefahren. Zur Beschickung dieser Maschine werden sie mittels einer Hebe- und Kippvorrichtung in die Höhe gefahren, um dann in ihre Entleerstellung gekippt zu werden, in der das Produkt durch Schwerkrafteinwirkung den Wagen verlassen kann. Solche Hub- und Beschickungswagen sind genormt (DIN 9797) und haben ein Fassungsvermögen von 210 I. Diese genormten Hub- und Beschickungswagen sind in der Lebensmittel- und in der pharmazeutischen Industrie überall dort unentbehrlich, wo es Probleme macht, Maschinen und Anlagen von Hand zu befüllen. Anlagen, in denen solche genormten Hub- und Beschickungswagen eingesetzt werden, sind beispielsweise aus den Firmenprospekten "scaniro information Compact 400", D.02.80 1324, und "Hebe- und Kippvorrichtung Typ L7", 1882, der Fa. INAS GmbH, D-4720 Beckum, bekannt. Bei diesen bekannten Anlagen bestehen die Hub- und Beschickungswagen aus rostfreiem Stahl. Solche Hub- und Beschickungswagen werden aber auch aus lebensmittelechtem Polyethylen hergestellt, und zwar in Übereinstimmung mit der Norm DIN 9797, die garantiert, daß ein solcher Hub- und Beschickungswagen aus Kunststoff mit der gleichen Hebe- und Kippvorrichtung wie der aus rostfreiem Stahl bestehende Hub- und Beschickungswagen verwendet werden kann. Ein solcher Hub- und Beschickungswagen aus Kunststoff ist beispielsweise aus dem FLEMA-Produktblatt "Beschickungswagen", PB: 98/106, der Anmelderin bekannt.

Die genormten Hub- und Beschickungswagen weisen an zwei einander gegenüberliegenden Seitenwänden außen angebrachte Vorrichtungen auf, mit denen die Wagen von einem gabelförmigen Hubwerkzeug aufgenommen werden können. Das Hubwerkzeug und die Aufnahmevorrichtungen sind so ausgebildet, daß der Wagen immer mit derselben Seitenwand voraus von dem Hubwerkzeug aufgenommen wird, um darin arretiert zu werden. Das Entleeren des Produkts aus dem Hub- und Beschickungswagen erfolgt somit immer über den oberen Rand derselben vorderen Seitenwand, die deshalb üblicherweise wie eine Ausgießtülle geformt ist. An der zu dieser vorderen Seitenwand entgegengesetzten Seite hat der Hubund Beschickungswagen, ob aus rostfreiem Stahl oder aus Kunststoff, einen Handgriff. An diesem wird der Hub- und Beschickungswagen ergriffen, wenn er durch Bedienungspersonal von einer Maschine zur anderen gefahren wird.

In den Anlagen der Lebensmittel- und pharmazeutischen Industrie müssen alle verwendeten Anlagenteile einschließlich der Hub- und Beschickungswagen höchsten Hygieneanforderungen genügen. Zur Erfüllung der Hygieneanforderungen werden die Hub- und Beschickungswagen in speziellen Waschanlagen im entleerten Zustand häufig gewaschen, wobei insbesondere darauf geachtet wird, nicht nur das Wageninnere zu säubern, sondern auch deren Unterseite und insbesondere die Räder. Bei gefülltem Wagen läßt sich ein solcher Waschvorgang aber nicht ohne weiteres durchführen, das oben geschilderte Problem also nicht ohne weiteres beseitigen. Probleme können sich aber ergeben, wenn die Hub- und Beschickungswagen von einer Maschine zur anderen gefahren werden. Sie rollen dabei auf dem Boden, der häufig naß ist und auf dem sich während des Betriebes der Anlage im Laufe eines Tages allerlei Verunreinigungen ansammeln, die an den Rädern haften bleiben und auch an der Unterseite des Wagens, wenn sie beim Fahren von den Rädern nach oben geschleudert werden. Damit solche Verunreinigungen nicht in das Produkt gelangen können, wenn dieses über der Füllmaschine bei gekipptem Hub- und Beschickungswagen aus diesem entleert wird, wäre es eigentlich erforderlich, die Unterseite des Wagens und dessen Räder zu reinigen, bevor der Wagen in die Entleerstellung gekippt wird. Es liegt auf der Hand, daß das bei gefülltem Wagen ein umständlicher und zeitraubender Prozeß ist. Das Problem ließe sich mildem, wenn die Hub- und Beschickungswagen statt mit Rädern mit Füßen versehen werden würden, um mittels Gabelstapler od. dgl. von einer Maschine zur anderen transportiert zu werden, also praktisch ohne den Boden zu berühren. Das wäre aber ebenfalls zu aufwendig und nicht in jeder Anlage der Lebensmittel- und der pharmazeutischen Industrie durchführbar. In sehr großen Anlagen wird das geschilderte Problem dadurch vermieden, daß auf Hub- und Beschickungswagen gänzlich verzichtet wird und das Produkt mittels Pumpen von einer Maschine zur nächsten gefördert wird. Solche Anlagen bleiben hier außer Betracht.

Vielmehr wird die überwiegende Mehrheit der Anlagen betrachtet, in denen mit Rädern oder Rollen versehene Hub- und Beschickungswagen eingesetzt werden.

Aufgabe der Erfindung ist es, einen Hub- und Beschickungswagen der im Oberbegriff des Patentanspruchs 1 angegebenen Art mit einer Einrichtung zu versehen, durch die sich die Hygieneanforderungen auf einfachere Weise erfüllen lassen.

Zur Lösung dieser Aufgabe weist der Hub- und Beschickungswagen nach der Erfindung die im Patentanspruch 1 angegebenen Merkmale auf.

Dadurch, daß der Wagen nach der Erfindung an oder in der Nähe seiner Unterseite mit einer dammartigen Erhöhung und/oder einer rinnenartigen Vertiefung versehen ist, die in der Entleerstellung des Wagens Verunreinigungen zurückhält, welche bestrebt sind, sich bei gekipptem Wagen nach unten zu bewegen und dem Produkt zu folgen, das den Behälter verläßt, hat er seine eigene, integrierte Schmutzauffangeinrichtung. Verunreinigungen wie Schmutz und Bakterien, die durch das Fahren im Betrieb an den Rädern hängenbleiben und beim Kippen und Entleeren des Wagens an dessen Außenwand entlang in das aus dem Wagen entleerte Produkt gelangen könnten, werden durch diese Einrichtung aufgefangen und zurückgehalten. Sobald der Hub- und Beschickungswagen wieder auf dem Boden abgestellt wird, fallen sie zurück auf den Boden. In der Kippstellung ist die Gefahr einer Verunreinigung des Produkts durch an den Rädern haftende Verunreinigungen besonders groß, weil der Wagen in der Entleerstellung häufig auch noch gerüttelt oder gegen einen Anschlag bewegt wird, damit kein zu entleerendes Gut in dem Wagen hängenbleibt. Gerade durch diesen Rüttelvorgang werden aber Verunreinigungen von den Rädern gelöst und könnten so in das Produkt gelangen, wenn die erfindungsgemäße Schmutzauffangeinrichtung nicht vorhanden wäre.

Vorteilhafte Ausgestaltungen der Erfindung bilden die Gegenstände der Unteransprüche.

Wenn in weiterer Ausgestaltung des Hub- und Beschickungswagens nach der Erfindung durch die Erhöhung und/oder Vertiefung ein Becken gebildet ist, das die Verunreinigungen bei gekipptem Wagen auffängt, so besteht ein besonderer Schutz bei flüssigen Verunreinigungen oder bei mit Flüssigkeiten vermischten Verunreinigungen. Diese werden in dem Auffangbecken solange zurückgehalten, bis der Wagen wieder auf den Boden gestellt wird.

Wenn in weiterer Ausgestaltung des Hub- und Beschickungswagens nach der Erfindung die Erhöhung ein in der Verlängerung von wenigstens einer Seitenwand des Wagens über die Unterseite vorstehender Steg ist oder aber ein benachbart zu wenigstens einem Seitenrand der Unterseite über die Unterseite vorstehender Steg ist, so ist die Ausbildung der erfindungsgemäßen Schmutzauffangeinrichtung besonders einfach. Diese wäre allerdings nicht in der Lage, größere Mengen an flüssigen Verunreinigungen zurückzuhalten.

In einer weiteren Ausgestaltung des Hub- und Beschickungswagens nach der Erfindung ist daher zweckmäßig der Steg an der Unterseite wenigstens zu den beiden einander gegenüberliegenden Seitenwänden hin verlängert, die der einen Seitenwand benachbart sind. In diesem Fall hat die erfindungsgemäße Schmutzauffangeinrichtung ein größeres Fassungsvermögen, insbesondere für flüssige oder für mit Flüssigkeiten vermischte Verunreinigungen.

Wenn in weiterer Ausgestaltung des Hub- und Beschickungswagens nach der Erfindung die Vertiefung eine Rille ist, die in der Unterseite an wenigstens einem Seitenrand derselben, gebildet ist, ist die Herstellung der erfindungsgemäßen Schmutzauffangeinrichtung wiederum sehr einfach, insbesondere, wenn der Hub- und Beschickungswagen aus Kunststoff besteht und somit eine wesentlich größere Wandstärke als ein Wagen aus rostfreiem Stahl hat.

Wenn in weiterer Ausgestaltung des Hub- und Beschickungswagens nach der Erfindung der wenigstens eine Seitenrand der Unterseite derjenige ist, der sich bei gekipptem Wagen und somit bei gegen die Vertikale geneigter Unterseite unten befindet, so sollte es sich zweckmäßig um einen Wagen handeln, der stets in derselben Anordnung von der Hebe- und Kippvorrichtung aufgenommen wird.

Wenn in weiterer Ausgestaltung des Hub- und Beschickungswagens nach der Erfindung die Erhöhung und/oder Vertiefung an der Unterseite rundum vorgesehen ist, spielt es keine Rolle, in welcher Anordnung der Hub- und Beschickungswagen von der Hebe- und Kippvorrichtung aufgenommen wird. Jedenfalls hat in dieser weiteren Ausgestaltung der Erfindung die Schmutzauffangeinrichtung ein besonders großes Fassungsvermögen. Wenn der Wagen in einer Waschanlage mit der Unterseite nach oben gewaschen wird, kann sich zwar auch in der Waschanlage Wasser in der Schmutzauffangeinrichtung sammeln, dieses verläßt jedoch ebenfalls die Schmutzauffangeinrichtung wieder, sobald der Wagen wieder mit seinen Rädem auf den Boden gestellt wird.

Ausführungsbeispiele der Erfindung werden im folgenden unter Bezugnahme auf die Zeichnungen näher beschrieben.

Es zeigt
- Fig. 1: eine Maschine mit zugeordneter Hebe- und Kippvorrichtung sowie einen Hub- und Beschickungswagen sowohl am Boden als auch in seiner Entleerstellung, d.h. in gekipptem Zustand,
- Fig. 2: den Hub- und Beschickungswagen nach der Erfindung mit einer ersten Ausführungsform einer Schmutzauffangeinrichtung,
- Fig. 3: einen Schnitt nach der Linie III- III in Fig. 2 (in einer Darstellung umgeklappt nach links),
- Fig. 4: als Einzelheit in einer Darstellung wie in Fig. 3 eine zweite Ausführungsform der Schmutzauffangeinrichtung,
- Fig. 5: in gleicher Darstellung wie in Fig. 4 eine dritte Ausführungsform der Schmutzauffangeinrichtung, und
- Fig. 6: in gleicher Darstellung wie in Fig. 2 eine vierte Ausführungsform der Schmutzauffangeinrichtung.

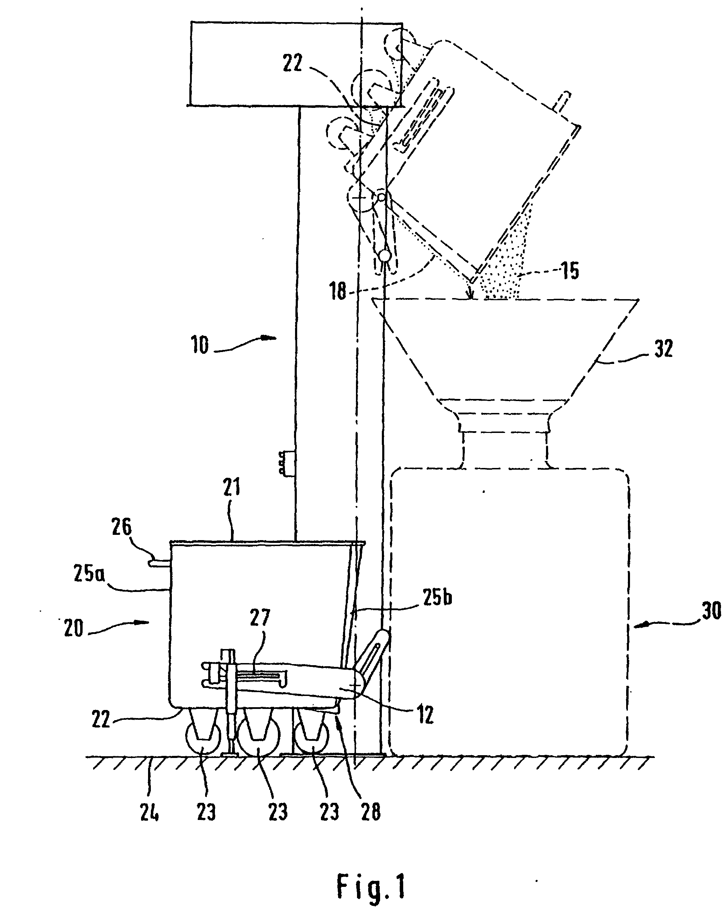

Fig. 1 zeigt eine in ihrer Gesamtheit mit 10 bezeichnete Hebe- und Kippvorrichtung und einen in seiner Gesamtheit mit 20 bezeichneten Hub- und Beschickungswagen. Letzterer ist mit ausgezogenen Linien in seiner Stellung am Boden und mit gestrichelten Linien in einer angehobenen Stellung gezeigt, in die er durch die Hebe- und Kippvorrichtung 10 gebracht worden ist und in der er dann wie dargestellt gekippt worden ist, um in den Einfülltrichter einer gestrichelt angedeuteten Maschine 30 entleert zu werden.

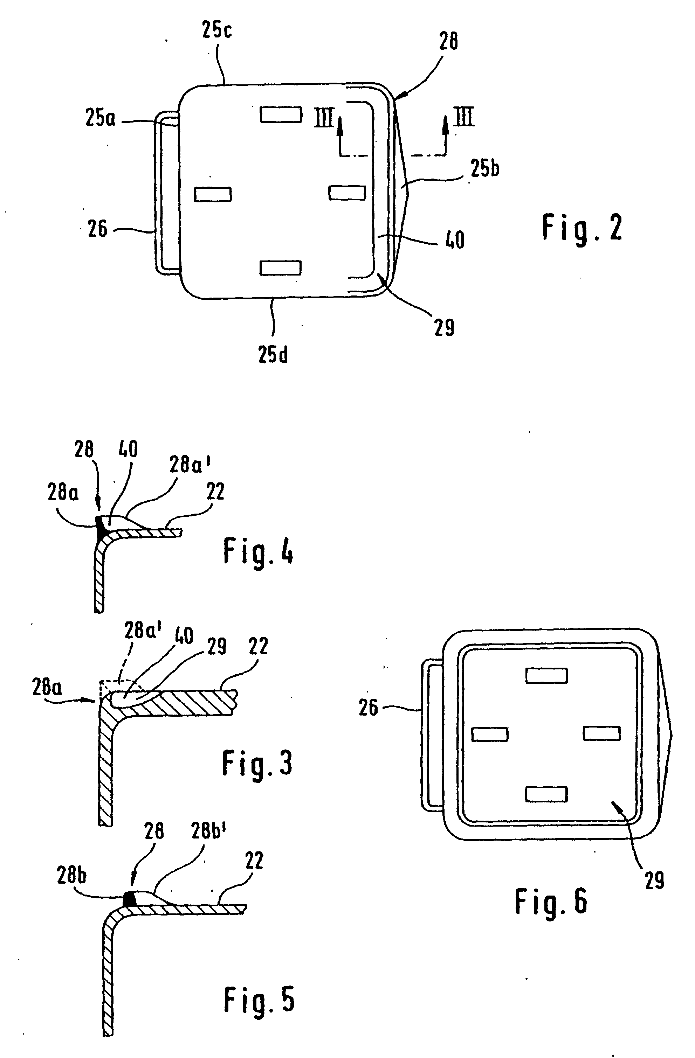

Der Hub- und Beschickungswagen 20 dient zur Aufnahme von Produkten wie Lebensmittel oder Pharmazeutika. Er ist über eine Öffnung an seiner Oberseite 21 füll- und entleerbar. An seiner Unterseite trägt er vier Räder 23, mit der er auf dem Boden 24 verfahrbar ist. Die Anordnung der Räder 23 an der Unterseite 22 ist in den Unteransichten des Wagens zu erkennen, die in den Fig. 2 und 6 dargestellt sind. Statt der Räder 23 könnte der Hub- und Beschickungswagen 20 auch Kufen, Füße od. dgl. haben. Der Hub- und Beschickungswagen 20 hat vier Seitenwände, die sich von seiner Unterseite 22 aus nach oben erstrecken, und zwar eine hintere Seitenwand 25a, eine vordere Seitenwand 25b und zwei einander gegenüberliegende parallele seitliche Seitenwände 25c und 25d. An der hinteren Seitenwand 25a ist der Hub- und Beschickungswagen 20 mit einem Griff 26 versehen. Die vordere Wand 25b ist nach oben hin und zur sich in Fahrtrichtung erstreckenden Längsmitte des Wagens hin abgeschrägt, so daß der Wagen an seiner Oberseite vorn eine vergrößerte Öffnung hat, die nach Art eine Gießtülle ausgebildet ist. An den beiden Seitenwänden 25c und 25d ist der Hub- und Beschickungswagen 20 jeweils mit einer Führungsschiene 27 (in den Fig. 2 und 6 nicht dargestellt) versehen, die von einer Gabel 12 der Hebe- und Kippvorrichtung aufgenommen werden. Zu diesem Zweck wird die Gabel 12 der Hebe- und Kippvorrichtung 10 in die in Fig. 1 unten dargestellte Stellung gebracht. Der Wagen wird dann mit seiner vorderen Seitenwand 25b voraus soweit in die Gabel 12 eingefahren, bis seine Führungsschienen 27 in der Gabel 12 arretiert sind. Anschließend wird der Hub- und Beschickungswagen 20 durch die Hebe- und Kippvorrichtung 10 nach oben gefahren und gekippt, wie es in Fig. 1 mit gestrichelten Linien dargestellt ist. In dieser gekippten Stellung oder Entleerstellung kann das Produkt, das in dem Hub- und Beschickungswagen 20 enthalten ist, diesen durch Schwerkrafteinwirkung verlassen, um über einen Trichter 32 in die Maschine 30 zu gelangen, bei der es sich beispielsweise um eine Maschine zum Füllen von Wurstdärmen handeln kann, wenn die dargestellte Anlage in einer Fleischwarenfabrik eingesetzt wird. In der oberen Stellung des Hub- und Beschickungswagens 20, die in Fig. 1 gezeigt ist, kann dieser am Ende des Entleervorganges bei Bedarf gerüttelt werden, um vollständig entleert zu werden. An den Rädern 23 haftende Verunreinigungen können dabei auf die Unterseite 22 des Wagens gelangen und könnten, da sie zumeist mit Wasser vermischt sind, an der vorderen Seitenwand 25b entlang an dem Wagen nach unten gelangen, um dem Produkt, das den Wagen verläßt, in die Maschine 30 zu folgen. Um das zu verhindern, ist der Hub- und Beschickungswagen 20 mit einer Schmutzauffangeinrichtung versehen, die nun im einzelnen beschrieben wird.

Als Schmutzauffangeinrichtung hat der Hub- und Beschickungswagen 20 an seiner Unterseite 22 eine dammartige Erhöhung und/oder eine rinnenartige Vertiefung, die in den Zeichnungen insgesamt mit 28 bzw. 29 bezeichnet sind und durch die in der Entleerstellung des Wagens 20 Verunreinigungen zurückgehalten werden, welche bestrebt sind, sich bei gekipptem Wagen nach unten zu bewegen und dem Produkt zu folgen, das den Wagen verläßt.

Durch die dammartige Erhöhung 28 und/oder die rinnenartige Vertiefung 29 kann ein Becken 40 gebildet werden, das die Verunreinigungen bei gekipptem Wagen 20 auffängt und in der Darstellung in den Fig. 2 und 3 zu erkennen ist. In diesem Fall besteht der Hub- und Beschickungswagen 20 aus Kunststoff, hat also eine ausreichende Wandstärke, damit die rinnenartige Vertiefung 29 in die Unterseite 22 eingeformt werden kann. Durch diese Ausbildung der rinnenartigen Vertiefung 29 und somit des Beckens 40 ergibt sich gleichzeitig die dammartige Erhöhung 28, wie es in Fig. 3 zu erkennen ist. Das Becken 40 hat hier die Form einer breiten Auffangrille.

Die Erhöhung ist entweder ein in der Verlängerung von wenigstens einer Seitenwand, hier der Seitenwand 25b, des Wagens 20 über die Unterseite 22 vorstehender Steg 28a, wie er in Fig. 4 gezeigt ist, oder aber die Erhöhung ist ein benachbart zu wenigstens einem Seitenrand (am unteren Ende der vorderen Seitenwand 25b) der Unterseite 22 über die Unterseite vorstehender Steg 28b, wie er in Fig. 5 gezeigt ist.

Die Stege 28a, 28b sind jeweils zu den beiden einander gegenüberliegenden Seitenwänden 25c, 25d hin durch Seitenstege 28a' bzw. 28b' verlängert. Das Becken 40 nach Fig. 3, das in die Unterseite 22 eingeformt ist, wird so jeweils durch einen Auffangsteg 28a, 28a' bzw. 28b, 28b' begrenzt und ist in der Darstellung in den Fig. 4 und 5 oberhalb der Unterseite 22 gebildet. Hingegen ist in der Darstellung nach Fig. 3 die rinnenartige Vertiefung 29 eine relativ breite Rille mit abgeschrägtem, d.h. zu der dammartigen Erhöhung 28 hin abfallendem Boden, die in der Unterseite 22 an wenigstens einem Seitenrand derselben gebildet ist, wie es in Fig. 3 gezeigt ist. Der wenigstens eine Seitenrand der Unterseite 22 ist dabei derjenige, der sich bei gekipptem Wagen 20 und somit bei gegen die Vertikale geneigter Unterseite 22 in der Darstellung in Fig. 1 (im Vergleich zu den übrigen Teilen der Unterseite und der an dieser angebrachten Räder) unten befindet. Da der Hub- und Beschickungswagen 20 stets in derselben Richtung in die Gabel 12 eingefahren wird, befindet sich auch der wenigstens eine Seitenrand stets in der in Fig. 1 mit gestrichelten Linien dargestellten Stellung links unten, d.h. in einer Stellung, in welcher von den Rädern 23 herabfallende, herabtropfende oder herablaufende Verunreinigungen durch das Becken 40 hinter der dammartigen Erhöhung 28 aufgefangen werden können. Die dammartige Erhöhung 28 und/oder die rinnenartige Vertiefung 29 kann an der Unterseite 22 rundum vorgesehen sein, wie es in Fig. 6 dargestellt ist, oder nur in dem in der Entleerstellung des Wagens 20 unten befindlichen Bereich der Unterseite 22, wie es in den Fig. 2 - 5 dargestellt ist. Schließlich wäre es auch ausreichend, lediglich eine dammartige Erhöhung 28 wie in den Fig. 4 und 5 vorzusehen, also ohne die seitlichen Verlängerungen 28a' bzw. 28b'. Diese Ausbildung der Schmutzauffangeinrichtung wäre ausreichend, wenn die Verunreinigungen nicht oder wenig fließfähig sind.

Die Ausbildung der Schmutzauffangeinrichtung nach den Fig. 4 bis 6 eignet sich besonders für Hub- und Beschickungswagen 20 aus rostfreiem Stahl, bei denen die rinnenartige Vertiefung 29 nicht in das Blech hinein ausgeformt werden kann. In diesem Fall wird die dammartige Erhöhung 28 zweckmäßig als ein auf die Unterseite 22 aufgeschweißter Steg ausgebildet.

## Patentansprüche

1. Hub- und Beschickungswagen für Produkte wie Lebensmittel oder Pharmazeutika, der über eine Öffnung an seiner Oberseite (21) füll- und entleerbar ist und an seiner Unterseite (22) Räder (23), Kufen oder Füße zum Abstützen am Boden (24) hat und durch Kippen in eine Entleerstellung bringbar ist, in der das Produkt durch Schwerkrafteinwirkung den Wagen (20) verlassen kann, **dadurch gekennzeichnet, daß** der Wagen (20) an seiner Unterseite (22) mit einer dammartigen Erhöhung (28) und/oder einer rinnenartigen Vertiefung (29) versehen ist, durch die in der Entleerstellung des Wagens (20) Verunreinigungen zurückgehalten werden, welche bestrebt sind, sich bei gekipptem Wagen nach unten zu bewegen und dem Produkt zu folgen, das den Wagen (20) verläßt.

2. Hub- und Beschickungswagen nach Anspruch 1, **dadurch gekennzeichnet, daß** durch die Erhöhung (28) und/oder die Vertiefung (29) ein Becken (40) gebildet ist, das die Verunreinigungen bei gekipptem Wagen (20) auffängt.

3. Hub- und Beschickungswagen nach Anspruch 1 oder 2, **dadurch gekennzeichnet, daß** die Erhöhung ein in der Verlängerung von wenigstens einer Seitenwand (25b) des Wagens (20) über die Unterseite (22) vorstehender Steg (28a) ist.

4. Hub- und Beschickungswagen nach Anspruch 1 oder 2, **dadurch gekennzeichnet, daß** die Erhöhung (28) ein benachbart zu wenigstens einem Seitenrand der Unterseite (22) über die Unterseite vorstehender Steg (28b) ist.

5. Hub- und Beschickungswagen nach Anspruch 3 oder 4, **dadurch gekennzeichnet, daß** der Steg (28a, 28b) wenigstens zu den beiden einander gegenüberliegenden Seitenwänden (25c, 25d) hin verlängert ist, die der einen Seitenwand (25b) benachbart sind.

6. Hub- und Beschickungswagen nach Anspruch 1 oder 2, **dadurch gekennzeichnet, daß** die Vertiefung (29) eine Rille ist, die in der Unterseite (22) an wenigstens einem Seitenrand derselben gebildet ist.

7. Hub- und Beschickungswagen nach Anspruch 6, **dadurch gekennzeichnet, daß** der wenigstens eine Seitenrand der Unterseite (22) derjenige ist, der sich bei gekipptem Wagen (20) und somit bei gegen die Vertikale geneigter Unterseite (22) unten befindet.

8. Hub- und Beschickungswagen nach einem der Ansprüche 1 bis 7, **dadurch gekennzeichnet, daß** die Erhöhung 28 und/oder Vertiefung (29) an der Unterseite (22) rundum vorgesehen ist.

## Claims

1. A lifting and charging car for products such as foodstuffs or pharmaceuticals, the car capable of being filled or emptied through an opening in its upper side (21); having wheels (23), runners or feet on its underside (22) for support on the ground (24); and further capable of being tilted into a discharge position in which the product can leave the car (20) through the effect of gravity, **characterized in that** the car (20) is provided on its underside (22) with a dam-like ridge (28) and/or a channel-like recess (29) for holding back impurities when the car (20) is in its discharge position, said impurities having a tendency to move down and follow the product leaving the car (20) when it is tilted.

2. The lifting and charging car according to claim 1, **characterized in that** a reservoir (40) for catching the impurities when the car (20) is tilted is formed by the ridge (28) and/or the recess (29).

3. The lifting and charging car according to claim 1 or 2, **characterized in that** the ridge is a rim (28a) projecting past the underside (22) in an extension of at least one side wall (25b) of the car (20).

4. The lifting and charging car according to claim 1 or 2, **characterized in that** the ridge (28) is a rim (28b) projecting past the underside (22) and being located adjacent to at least one side edge of the underside.

5. The lifting and charging car according to claim 3 or 4, **characterized in that** the rim (28a, 28b) is extended at least to the two opposite side walls (25c, 25d) adjoining the one side wall (25b).

6. The lifting and charging car according to claim 1 or 2, **characterized in that** the recess (29) is a groove formed in the underside (22) in at least one side edge of the same.

7. The lifting and charging car according to claim 6, **characterized in that** the at least one side wall of the underside (22) is the one located at the bottom when the car (20) is tilted and the underside (22) is thus inclined against the vertical.

8. The lifting and charging car according to any one of claims 1 to 7, **characterized in that** the ridge 28 and/or recess (29) is provided all around the underside (22).

## Revendications

1. Chariot de levage et de chargement pour des produits tels que des produits alimentaires ou pharmaceutiques, qui peut être rempli et vidé par une ouverture située sur la face supérieure (21) et qui possède sur sa face inférieure (22) des roues (23), des patins ou des pieds pour appui sur le sol (24), et qui peut être amené en position de vidange par basculement, de sorte le produit peut quitter le chariot (20) par effet de la gravité, **caractérisé en ce que** le chariot (20) est pourvu sur sa face inférieure (22) d'un rehaussement en forme de remblai et/ou d'un creux en forme de gouttière (29) grâce auquel les saletés qui en général tendent à se déplacer vers le bas quand le chariot bascule et à suivre le produit qui quitte le chariot (20), peuvent être retenues lorsque le chariot (20) est en position de vidange.

2. Chariot de levage et de chargement selon la revendication 1, **caractérisé en ce qu'**une cuvette (40) est formée par le rehaussement (28) et/ou le creux (29) qui retient les saletés quand le chariot est basculé.

3. Chariot de levage et de chargement selon l'une des revendications 1 ou 2, **caractérisé en ce que** le rehaussement est un talon (28a) saillant situé au-dessus de la face inférieure (22) dans le prolongement d'au moins une paroi latérale (25b) du chariot (20).

4. Chariot de levage et de chargement selon l'une des revendications 1 ou 2, **caractérisé en ce que** le rehaussement (28) est un talon (28b) saillant situé au-dessus de la face inférieure, à proximité d'au moins un bord de côté de la face inférieure (22).

5. Chariot de levage et de chargement selon l'une des revendications 3 ou 4, **caractérisé en ce que** le talon (28a, 28b) est prolongé au moins en direction des deux parois latérales (25c, 25d) qui se font face et qui sont voisines de la paroi latérale (25b).

6. Chariot de levage et de chargement selon l'une des revendications 1 ou 2, **caractérisé en ce que** le creux (29) est une rainure qui est formée dans la face inférieure (22) sur au moins un bord latéral de ladite face.

7. Chariot de levage et de chargement selon la revendication 6, **caractérisé en ce que** ce bord latéral d'au moins la face inférieure (22), est celui qui se trouve en dessous lorsque le chariot (20) est basculé et donc lorsque ladite face inférieure (22) est inclinée par rapport à la verticale.

8. Chariot de levage et de chargement selon l'une quelconque des revendications 1 à 7, **caractérisé en ce que** le rehaussement (28) et/ou le creux (29) sont prévus tout autour de la face inférieure (22).
